# EUROPEAN PATENT SPECIFICATION

(11) **EP 3 577 373 B1**
(45) Date of publication and mention of the grant of the patent: **03.03.2021**
(21) Application number: 18703416.0
(22) Date of filing: 18.01.2018
(51) Int. Cl.: F16K 3/24, F16K 27/02, F16K 27/04, F16K 27/08, B23P 15/00

(54) **MODULAR VALVE TRIM ASSEMBLIES FOR CONTROL VALVES**
MODULARE VENTILSTELLANORDNUNGEN FÜR STEUERVENTILE
ENSEMBLES DE GARNITURE DE SOUPAPE MODULAIRES POUR SOUPAPES DE COMMANDE

(30) Priority: 02.02.2017 US 201715423087
(43) Date of publication of application: 11.12.2019
(73) Proprietor: Fisher Controls International LLC, Marshalltown, IA 50158 (US)
(72) Inventor: OHRT, Wesley, T., Ankeny, IA 50023 (US); GABRIEL, Thomas, Marshalltown, IA 50158 (US); MCCARTY, Michael, Marshalltown, IA 50158 (US); HOSTETTER, Steven, Colfax, IA 50054 (US)
(74) Representative: Petraz, Gilberto Luigi
(86) International application number: PCT/US2018/014181
(87) International publication number: WO 2018/144230

(56) References cited:
- EP-A1- 0 842 074
- EP-A1- 2 616 719
- EP-A1- 3 577 371
- WO-A1-2015/167422
- DE-B- 1 191 646
- FR-A1- 2 559 096
- US-A- 3 506 242
- US-A- 3 892 384
- US-A- 4 249 574
- US-A- 5 304 336
- US-A1- 2002 017 327
- US-A1- 2006 180 783
- US-A1- 2008 053 544

## Description

### FIELD OF THE DISCLOSURE

This disclosure relates generally to control valves and, more specifically, to modular valve trim assemblies for control valves.

### BACKGROUND

Conventional control valves include numerous trim components that are individually inserted into the body of the valve during a valve assembly process. Proper loading and/or assembly of the individual trim components is a complex process that gives rise to numerous manufacturing and assembly concerns. For example, tolerance stack-ups must be accounted for during the manufacturing of the individual trim components and the subsequent assembly thereof to ensure that the individual trim components properly fit within and/or are properly positioned within the assembled control valve. Proper alignment of the trim parts is required to ensure proper seating of the valve plug in the seat ring to achieve shut-off of the fluid flow through the valve.

### SUMMARY

Modular valve trim assemblies for control valves are disclosed herein. In some known examples, a first modular valve trim apparatus includes a bonnet and a cage coupled to the bonnet. The cage has an integral seat. A second modular valve trim apparatus includes a single-piece bonnet having an integral seat and an integral cage. The second modular valve trim apparatus includes a plug irremovably located within the single-piece bonnet. Document EP 0842074 A1 discloses a known electromagnetic valve. Document EP 2616719 A1 describes a volume booster with discrete capacity adjustment. Document US 3892384 A discloses a double seated cage valve with flexible plug seat. Document US 2002/017327 A1 describes a single seat valve apparatus. Document US 2008/053544 A1 describes a flow port guided globe valve. WO 2015/167422 A1 describes a turbine combustion chamber pressure assisted control valve. Document US 4249574 A describes an orifice trim and backpressure plate for high pressure valves.

### BRIEF DESCRIPTION OF THE DRAWINGS

FIG. 1 is a cross-sectional view of a known control valve.
FIG. 2 is a cross-sectional view of a known first example control valve having an example modular valve trim assembly.
FIG. 3 is a cross-sectional view of the known example modular valve trim assembly of FIG. 2 in isolation.
FIG. 4 is a cross-sectional view of a second example control valve having an example modular valve trim assembly.
FIG. 5 is a cross-sectional view of the example modular valve trim assembly of FIG. 4 in isolation.
FIG. 6 is a cross-sectional view of a portion of the example modular valve trim assembly of FIGS. 4 and 5 as manufactured via a first example additive manufacturing process.
FIG. 7 is a cross-sectional view of a portion of the example modular valve trim assembly of FIGS. 4 and 5 as manufactured via a second example additive manufacturing process.

Certain examples are shown in the above-identified figures and described in detail below. The figures are not necessarily to scale and certain features and certain views of the figures may be shown exaggerated in scale or in schematic for clarity and/or conciseness.

### DETAILED DESCRIPTION

Conventional control valves include numerous trim components that are individually inserted into the body of the valve during a valve assembly process. Examples of such individual trim components may include a seat ring, a seat ring gasket, a cage, a plug, a spiral wound gasket, a shim gasket, a bonnet gasket and a bonnet, among other trim components. The proper loading and/or assembly of such individual trim components is a complex process that gives rise to numerous manufacturing and assembly concerns, particularly when a relatively large number of individual trim components are to be inserted and assembled into the valve body.

For example, tolerance stack-ups must be accounted for during the manufacturing of the individual trim components and the subsequent assembly thereof to ensure that the individual trim components properly fit within and/or are properly positioned within the assembled control valve. Failure to properly load the individual trim components may result in one or more leak path(s) forming within the control valve, thereby creating a possibility that a process fluid passing though the control valve may leak past the trim from the inlet to the outlet of the control valve.

As another example, the variability associated with the manufacturing and assembly processes of such conventional control valves grows in magnitude as the number of individual trim components to be inserted into the body of the valve increases. The time associated with the manufacturing and assembly processes likewise grows as a result of an increased number of individual trim components. Furthermore, each individual trim component is a serviceable component that may require repair and/or replacement upon failure of the component. Thus, as the number of individual trim components to be assembled into the body of the valve increases, so too does the possibility that at least one serviceable component of the valve will require servicing during the lifetime of the valve.

Unlike the conventional control valves described above that include relatively large numbers of individual trim components, the control valves disclosed herein have modular valve trim assemblies formed with a bonnet of the valve. Each modular valve trim assembly disclosed herein is removably couplable to a body of a control valve such that the modular valve trim assembly may be coupled to and/or removed from the body of the control valve as a unitary structure.

The modular valve trim assemblies are formed as a single-piece component with the bonnet of the valve. As used herein in reference to a component (e.g., a bonnet, etc.), the term "single-piece" refers generally to a unitary, one-piece component that is free of joints held together and/or sealed via welding or other mechanical fastening and/or sealing means. A single-piece component may be formed and/or manufactured by, for example, casting or additive manufacturing. As used herein, the term "additive manufacturing" refers generally to a process by which three-dimensional design data (e.g., a computer-aided design (CAD) file) is used in conjunction with a controllable laser to fabricate a single-piece component by depositing successive layers of material on top of one another. For example, rather than milling and/or machining a component from a solid block of material, additive manufacturing fabricates the component layer by layer using one or more material(s) in the form of a fine powder (e.g., a metallic powder, a plastic powder, a composite powder, etc.) capable of being solidified by application of the laser thereto.

Implementation of a control valve having a modular valve trim assembly reduces the number of individual trim components to be inserted into the body of the valve during the valve assembly process. For example, implementation of a control valve having a modular valve trim assembly comprising a bonnet, a cage coupled to the bonnet, and a seat integrally formed with the cage eliminates the need for an individual seat ring, an individual seat ring gasket, an individual spiral wound gasket and/or an individual shim gasket in the control valve. As another example, implementation of a control valve having a modular valve trim assembly comprising a single-piece bonnet having an integral cage and an integral seat eliminates the need for an individual seat ring, an individual seat ring gasket, an individual cage, an individual spiral wound gasket and/or an individual shim gasket in the control valve.

Reducing the number of individual trim components to be inserted and assembled into the body of a valve advantageously reduces the variability associated with the manufacturing and assembly processes of the valve, reduces the extent of time associated with the manufacturing and assembly processes of the valve, and provides for a more robust valve. Reducing the number of individual trim components to be inserted and assembled into the body of the valve also advantageously reduces the number of joints present in the valve, and accordingly reduces the number of potential leakage paths of the valve. Reducing the number of individual trim components to be inserted and assembled into the body of the valve also advantageously reduces the number of serviceable components of the valve, thereby reducing the possibility that at least one serviceable component of the valve will require servicing during the lifetime of the valve.

Each modular valve trim assembly disclosed herein may be loaded and/or inserted as a single, unitary structure into a body of a control valve. The unitary nature of the disclosed modular valve trim assemblies advantageously enables valve trim replacement operations and/or processes to be completed in less time relative to the time that may be consumed when replacing one or more individual valve trim components of the conventional control valves described above. The unitary nature of the disclosed modular valve trim assemblies also advantageously enables a modular valve trim assembly (e.g., a replacement modular valve trim assembly) to be leak tested prior to shipment of the modular valve trim assembly and/or prior to attachment of the modular valve trim assembly to a control valve.

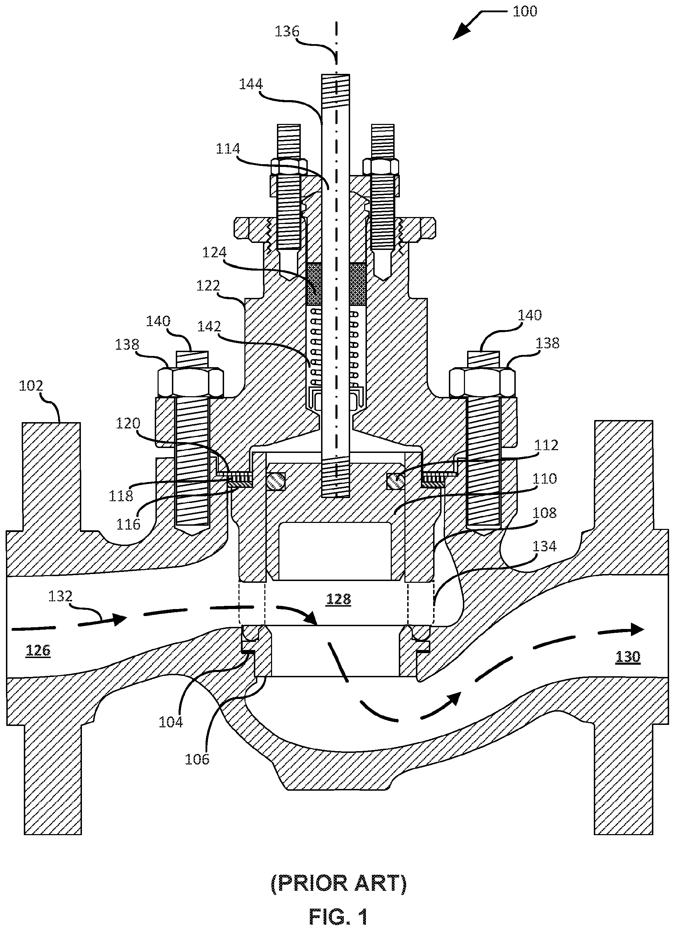

Before describing the details of example control valves having modular valve trim assemblies, a description of a known control valve is provided in connection with FIG. 1. FIG. 1 is a cross-sectional view of a known control valve 100. The control valve 100 of FIG. 1 includes a valve body 102, a seat ring gasket 104, a seat ring 106, a cage 108, a plug 110, a plug seal 112, a stem 114, a spiral wound gasket 116, a shim gasket 118, a bonnet gasket 120, a bonnet 122, and a packing 124, each of which is an individual component of the control valve 100.

The valve body 102 includes an inlet 126, a cavity 128, and an outlet 130. A fluid flowing through the valve body 102 and/or, more generally, through the control valve 100, enters the inlet 126, passes through the cavity 128, and exits the outlet 130 as indicated by the pathway 132 shown in FIG. 1. The seat ring gasket 104, the seat ring 106, the cage 108, the plug 110, the plug seal 112, the stem 114, the spiral wound gasket 116, the shim gasket 118, and the bonnet gasket 120 of the control valve 100 are loaded and/or positioned (e.g., individually loaded and/or positioned) within the cavity 128 of the valve body 102 in conjunction with assembly of the control valve 100.

During assembly of the control valve 100, the seat ring gasket 104 and the seat ring 106 are the first of the individual trim components of the control valve 100 to be inserted into the cavity 128 of the valve body 102. The seat ring gasket 104 fills space that may exist between the valve body 102 and the seat ring 106 (e.g., space resulting from manufacturing irregularities of the valve body 102 and/or the seat ring 106), thereby preventing process fluid from leaking between the valve body 102 and the seat ring 106. The seat ring 106 is configured to mate with the plug 110 of the control valve 100 when the plug 110 and/or, more generally, the control valve 100, is in a closed position. As shown in FIG. 1, the plug 110 and/or, more generally, the control valve 100, is in an open position.

The cage 108 is the next of the individual trim components of the control valve 100 to be inserted into the cavity 128 of the valve body 102. When properly loaded into the cavity 128, the cage 108 is compressed against the seat ring 106, and the seat ring 106 is compressed against the seat ring gasket 104. The cage 108 includes a plurality of windows 134 (e.g., apertures) arranged in a spaced relationship around the perimeter of the cage 108. Fluid flowing through the control valve 100 passes from the inlet 126, through one or more of the windows 134 of the cage 108, through the seat ring 106, and toward the outlet 130 of the control valve 100. The arrangement and/or orientation of the windows 134 about the perimeter of the cage 108 impacts the flow characteristics of the fluid passing through the control valve 100, as well as the rate at which the fluid passes through the control valve 100.

The plug 110, the plug seal 112, and the stem 114 are the next of the individual trim components of the control valve 100 to be inserted into the cavity 128 of the valve body 102. The plug 110 and plug seal 112 are loaded within an interior surface of the cage 108. The plug seal 112 prevents process fluid from leaking between the cage 108 and the plug 110. The stem 114 is coupled to the plug 110 by, for example, screwing a threaded end of the stem 114 into a threaded bore of the plug 110. The plug 110 and the stem 114 are movable and/or slidable within the cage 108 and relative to the seat ring 106 of the control valve 100 along a longitudinal axis 136 defined by the stem 114. As the plug 110 moves and/or slides downward from its current position shown in FIG. 1 past the windows 134 of the cage 108, fluid passing through the control valve 100 is restricted and/or blocked. The plug 110 is configured to mate with the seat ring 106 to fully close off the fluid pathway 132 shown in FIG. 1.

The spiral wound gasket 116, the shim gasket 118 and the bonnet gasket 120 are the next of the individual trim components of the control valve 100 to be inserted into the cavity 128 of the valve body 102. The spiral wound gasket 116, the shim gasket 118 and the bonnet gasket 120 fill space that may exist between the valve body 102, the cage 108 and/or the bonnet 122 of the control valve 100, thereby preventing process fluid from leaking between the valve body 102, the cage 108 and/or the bonnet 122.

The bonnet 122 of FIG. 1 is removably coupled to the valve body 102 via a plurality of nuts 138 and bolts and/or threaded studs 140. When the bonnet 122 is coupled to the valve body 102 (e.g., as shown in FIG. 1), the bonnet 122 confines the seat ring gasket 104, the seat ring 106, the cage 108, the plug 110, the plug seal 112, the spiral wound gasket 116, the shim gasket 118 and the bonnet gasket 120 within the cavity 128 of the valve body 102. The stem 114 passes through a cavity 142 of the bonnet 122, and a portion 144 of the stem 114 protrudes externally from the cavity 142 of the bonnet 122. The packing 124 (e.g., packing rings, etc.) loaded and/or inserted into the cavity 142 of the bonnet 122 supports the stem 114 within the cavity 142 of the bonnet 122 and prevents process fluid from leaking through the cavity 142 of the bonnet 122 between the stem 114 and the bonnet 122. When the bonnet 122 is properly coupled to the valve body 102, the stem 114 is movable and/or slidable along the longitudinal axis 136 relative to the seat ring 106 of the control valve 100.

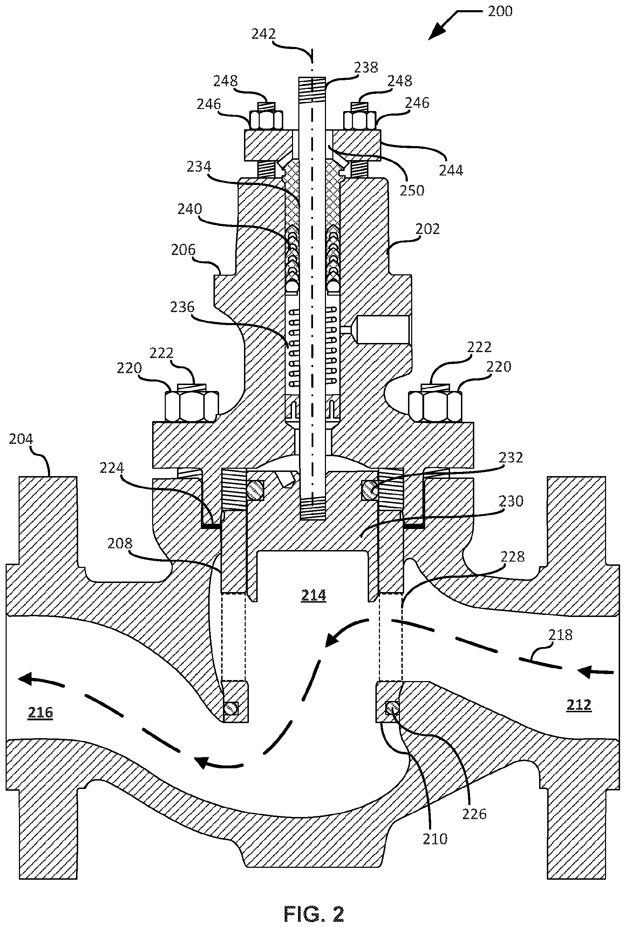

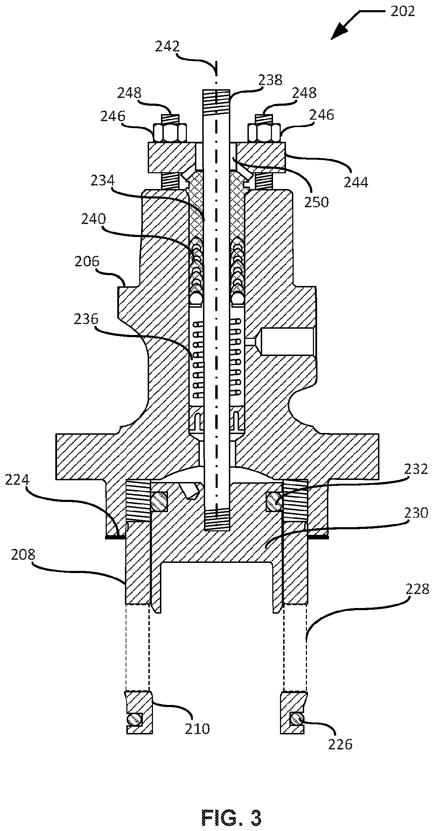

In contrast to the known control valve 100 of FIG. 1 including the individual trim components described above, the example control valves described herein include modular valve trim assemblies incorporated into and/or formed as part of the bonnet of the control valve. FIG. 2 is a cross-sectional view of a known first example control valve 200 having an example modular valve trim assembly 202 and an example valve body 204. The modular valve trim assembly 202 is removably couplable to the valve body 204 of the control valve 200 such that the modular valve trim assembly 202 may be coupled to and/or removed from the valve body 204 as a unitary structure. FIG. 3 is a cross-sectional view of the example modular valve trim assembly 202 of FIG. 2 in isolation. The modular valve trim assembly 202 of FIGS. 2 and 3 includes an example bonnet 206 and an example cage 208 having an example integral seat 210. Formation of the integral seat 210 as part of the cage 208 of FIGS. 2 and 3 advantageously eliminates the need for an individual seat ring and an individual seat ring gasket in the control valve 200 of FIG. 2. Incorporation of the cage 208 and the integral seat 210 as part of the modular valve trim assembly 202 of FIGS. 2 and 3 advantageously eliminates the need for an individual spiral wound gasket and an individual shim gasket in the control valve 200 of FIG. 2.

The valve body 204 of FIG. 2 includes an example inlet 212, an example cavity 214 and an example outlet 216. A fluid flowing through the valve body 204 and/or, more generally, through the control valve 200, enters the inlet 212, passes through the cavity 214, and exits the outlet 216 as indicated by the example pathway 218 shown in FIG. 2. In other examples, the identification of the inlet 212 and the outlet 216 may be reversed such that a fluid flowing through the valve body 204 and/or, more generally, through the control valve 200, travels in a direction opposite to that of the pathway 218 illustrated in FIG. 2.

The bonnet 206 and/or, more generally, the modular valve trim assembly 202 of FIGS. 2 and 3 is/are removably coupled to the valve body 204 of FIG. 2 via a plurality of example nuts 220 and example bolts and/or threaded studs 222. An example bonnet gasket 224 fills space that may exist between the valve body 204 and the bonnet 206 of the control valve 200, thereby preventing process fluid from leaking between the valve body 204 and the bonnet 206. In some examples, the bonnet gasket 224 is coupled (e.g., via adhesive) to the bonnet 206 and/or, more generally, to the modular valve trim assembly 202. The cage 208 and the integral seat 210 of the modular valve trim assembly 202 of FIGS. 2 and 3 are accessible when the bonnet 206 and/or, more generally, the modular valve trim assembly 202 of FIGS. 2 and 3 is/are not coupled to the valve body 204 of FIG. 2.

When the bonnet 206 and/or, more generally, the modular valve trim assembly 202 of FIGS. 2 and 3 is/are coupled to the valve body 204 (e.g., as shown in FIG. 2), the cage 208 and the integral seat 210 of the modular valve trim assembly 202 are positioned within the cavity 214 of the valve body 204 adjacent interior wall surfaces of the valve body 204. An example radial seal 226 prevents process fluid from leaking between the integral seat 210 of the modular valve trim assembly 202 and an interior wall surface of the valve body 204. The radial seal 226 is coupled to the cage 208 proximate the integral seat 210. In some examples, the radial seal 226 may be a spring-loaded and/or spring-energized seal. In other examples, the radial seal 226 may be a metallic c-seal or other type of resilient metal seal.

In the illustrated example of FIGS. 2 and 3, the cage 208 of the modular valve trim assembly 202 is coupled to the bonnet 206 via a threaded connection. For example, a threaded connection may be formed between the cage 208 and the bonnet 206 by screwing a threaded end of the cage 208 into a threaded portion of the bonnet 206. In other examples, the cage 208 may be coupled to the bonnet by alternative fastening means (e.g., pins, nuts and bolts, adhesive, etc.).

The cage 208 of FIGS. 2 and 3 includes a plurality of example windows 228 (e.g., apertures) arranged in a spaced relationship around the perimeter of the cage 208. Fluid flowing through the control valve 200 passes from the inlet 212, through one or more of the windows 228 of the cage 208, past the integral seat 210, and toward the outlet 216 of the control valve 200. The arrangement and/or orientation of the windows 228 about the perimeter of the cage 208 impacts the flow characteristics of the fluid passing through the control valve 200, as well as the rate at which the fluid passes through the control valve 200.

The modular valve trim assembly 202 of FIGS. 2 and 3 also includes an example plug 230 and an example plug seal 232. The plug 230 is located within the modular valve trim assembly 202 such that the plug 230 is adjacent an interior surface of the cage 208 of the modular valve trim assembly 202. The plug seal 232 prevents process fluid from leaking between the cage 208 and the plug 230. In some examples, the plug seal 232 may be a spring-loaded and/or spring-energized seal. In some examples, the plug 230 and the plug seal 232 are positioned within the cage 208 of the modular valve trim assembly 202 prior to the cage 208 being coupled to the bonnet 206.

The plug 230 of FIGS. 2 and 3 is configured to mate with the integral seat 210 of the modular valve trim assembly 202 of FIGS. 2 and 3 when the plug 230 and/or, more generally, the control valve 200, is in a closed position. As shown in FIG. 2, the plug 230 and/or, more generally, the control valve 200, is in an open position. Although the example of FIGS. 2 and 3 illustrates a specific shape of the plug 230 and the integral seat 210 of the modular valve trim assembly 202, plugs and integral seats of the modular valve trim assemblies described herein may be of any shape, arrangement and/or orientation so long as the plug is configured to mate with the integral seat when the plug and/or, more generally, the control valve 200, is in a closed position.

The modular valve trim assembly 202 of FIGS. 2 and 3 also includes an example stem 234. The stem 234 is coupled to the plug 230 by, for example, screwing a threaded end of the stem 234 into a threaded bore of the plug 230. The stem 234 passes through an example cavity 236 of the bonnet 206. An example portion 238 of the stem 234 protrudes externally from the cavity 236 of the bonnet 206. An example packing 240 (e.g., packing rings, etc.) loaded and/or inserted into the cavity 236 of the bonnet 206 supports the stem 234 within the cavity 236 of the bonnet 206 and prevents process fluid from leaking through the cavity 236 of the bonnet 206 between the stem 234 and the bonnet 206.

The plug 230 and the stem 234 of the modular valve trim assembly 202 of FIGS. 2 and 3 are movable and/or slidable within the cage 208 and relative to the integral seat 210 of the modular valve trim assembly 202 along an example longitudinal axis 242 defined by the stem 234. As the plug 230 moves and/or slides downward from its current position shown in FIG. 2 past the windows 228 of the cage 208, fluid passing through the control valve 200 is restricted and/or blocked. The plug 230 is configured to mate with the integral seat 210 of the modular valve trim assembly 202 to fully close off the fluid pathway 218 shown in FIG. 2.

The modular valve trim assembly 202 of FIGS. 2 and 3 also includes an example packing flange 244. The packing flange 244 is removably coupled to the bonnet 206 via a plurality of example nuts 246 and example bolts and/or threaded studs 248 to confine the packing 240 within the cavity 236 of the bonnet 206. The stem 234 of the modular valve trim assembly 202 passes through an example cavity 250 of the packing flange 244.

In some examples, one or more component(s) (e.g., the bonnet 206, the cage 208 including the integral seat 210, the plug 230, the stem 234, the packing flange 244, etc.) of the modular valve trim assembly 202 of FIGS. 2 and 3 may be formed and/or fabricated via one or more casting process(es). For example, the cage 208 including the integral seat 210 may be cast as a single, unitary piece of material free of joints.

In some examples, one or more component(s) of the modular valve trim assembly 202 of FIGS. 2 and 3 are assembled according to an assembly method. In some examples, the assembly method includes coupling the plug 230 to the stem 234. In some examples, the stem 234 may be coupled to the plug 230 by screwing a threaded end of the stem 234 into a threaded bore of the plug 230. In some examples, the assembly method further includes coupling the plug seal 232 to the plug 230. In some examples, the assembly method further includes positioning the plug 230 into the cage 208 having the integral seat 210. In some examples, the assembly method further includes coupling the cage 208 to the bonnet 206 such that the portion 238 of the stem 234 protrudes externally from the cavity 236 of the bonnet 206. In some examples, the cage 208 may be coupled to the bonnet 206 by screwing a threaded end of the cage 208 into a threaded portion of the bonnet 206. In some examples, the assembly method further includes positioning the packing 240 in the cavity 236 of the bonnet 206, and coupling the packing flange 244 to the bonnet 206 to confine the packing 240. In some examples, the packing flange 244 may be coupled to the bonnet 206 via the nuts 246 and the bolts and/or threaded studs 248. In some examples, the assembly method further includes coupling the bonnet gasket 224 to the bonnet 206. In some examples, the bonnet gasket 224 may be coupled to the bonnet 206 via adhesive. In some examples, the assembly method further includes coupling the radial seal 226 to the cage 208 proximate the integral seat 210.

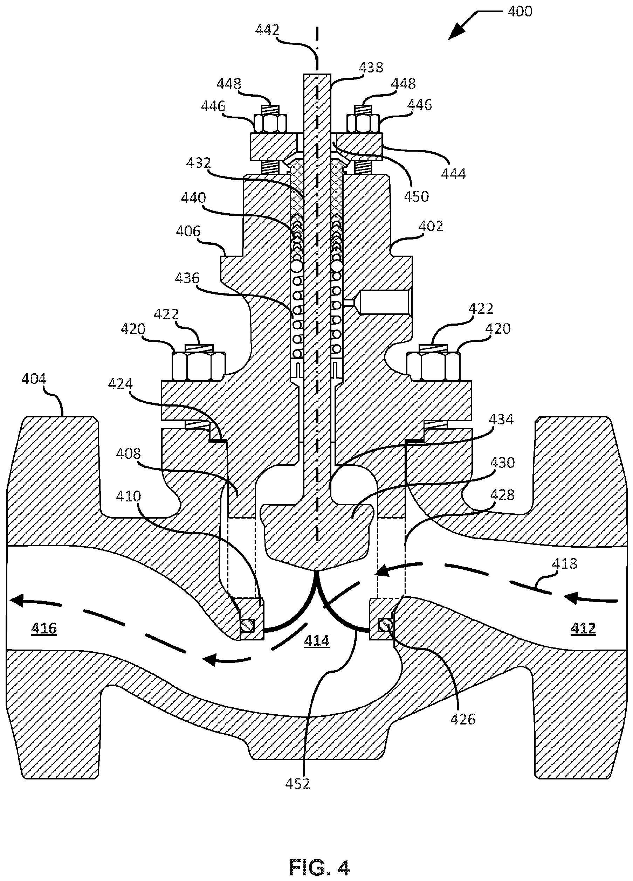

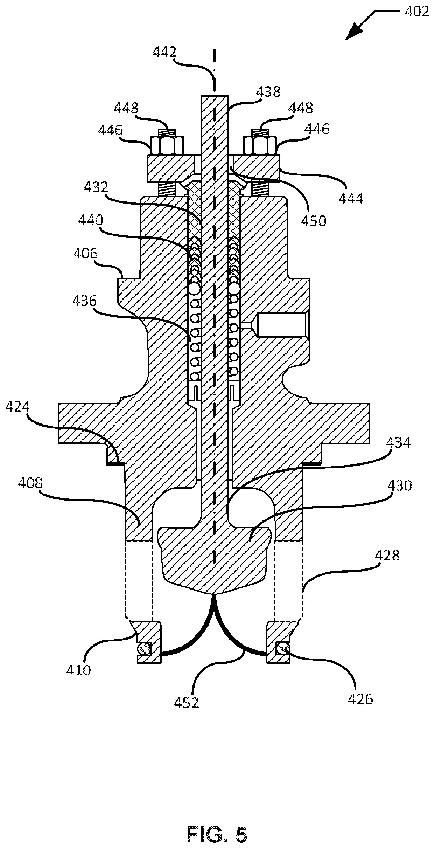

FIG. 4 is a cross-sectional view of a second example control valve 400 having an example modular valve trim assembly 402 and an example valve body 404. The modular valve trim assembly 402 is removably couplable to the valve body 404 of the control valve 400 such that the modular valve trim assembly 402 may be coupled to and/or removed from the valve body 404 as a unitary structure. FIG. 5 is a cross-sectional view of the example modular valve trim assembly 402 of FIG. 4 in isolation. The modular valve trim assembly 402 of FIGS. 4 and 5 includes an example single-piece bonnet 406 having an example integral cage 408 and an example integral seat 410. Formation of the integral cage 408 and the integral seat 410 as part of the single-piece bonnet 406 of FIGS. 4 and 5 advantageously eliminates the need for an individual seat ring, an individual seat ring gasket, an individual cage, an individual spiral wound gasket, and an individual shim gasket in the control valve 400 of FIG. 4.

The valve body 404 of FIG. 4 includes an example inlet 412, an example cavity 414 and an example outlet 416. A fluid flowing through the valve body 404 and/or, more generally, through the control valve 400, enters the inlet 412, passes through the cavity 414, and exits the outlet 416 as indicated by the example pathway 418 shown in FIG. 4. In other examples, the identification of the inlet 412 and the outlet 416 may be reversed such that a fluid flowing through the valve body 404 and/or, more generally, through the control valve 400, travels in a direction opposite to that of the pathway 418 illustrated in FIG. 4.

The single-piece bonnet 406 and/or, more generally, the modular valve trim assembly 402 of FIGS. 4 and 5 is/are removably coupled to the valve body 404 of FIG. 4 via a plurality of example nuts 420 and example bolts and/or threaded studs 422. An example bonnet gasket 424 fills space that may exist between the valve body 404 and the single-piece bonnet 406 of the control valve 400, thereby preventing process fluid from leaking between the valve body 404 and the single-piece bonnet 406. In some examples, the bonnet gasket 424 is coupled (e.g., via adhesive) to the single-piece bonnet 406 and/or, more generally, to the modular valve trim assembly 402. The integral cage 408 and the integral seat 410 of the single-piece bonnet 406 of FIGS. 4 and 5 are accessible when the single-piece bonnet 406 and/or, more generally, the modular valve trim assembly 402 of FIGS. 4 and 5 is/are not coupled to the valve body 404 of FIG. 4.

When the single-piece bonnet 406 and/or, more generally, the modular valve trim assembly 402 of FIGS. 4 and 5 is/are coupled to the valve body 404 (e.g., as shown in FIG. 4), the integral cage 408 and the integral seat 410 of the single-piece bonnet 406 are positioned within the cavity 414 of the valve body 404 adjacent interior wall surfaces of the valve body 404. An example radial seal 426 prevents process fluid from leaking between the integral seat 410 of the single-piece bonnet 406 and an interior wall surface of the valve body 404. The radial seal 426 is coupled to the integral cage 408 proximate the integral seat 410. In some examples, the radial seal 426 may be a spring-loaded and/or spring-energized seal. In other examples, the radial seal 426 may be a metallic c-seal or other type of resilient metal seal.

The integral cage 408 of the single-piece bonnet 406 of FIGS. 4 and 5 includes a plurality of example windows 428 (e.g., apertures) arranged in a spaced relationship around the perimeter of the integral cage 408. Fluid flowing through the control valve 400 passes from the inlet 412, through one or more of the windows 428 of the integral cage 408, past the integral seat 410, and toward the outlet 416 of the control valve 400. The arrangement and/or orientation of the windows 428 about the perimeter of the integral cage 408 impacts the flow characteristics of the fluid passing through the control valve 400, as well as the rate at which the fluid passes through the control valve 400.

The modular valve trim assembly 402 of FIGS. 4 and 5 also includes an example plug 430 irremovably located within the single-piece bonnet 406. The plug 430 is configured to mate with the integral seat 410 of the single-piece bonnet 406 when the plug 430 and/or, more generally, the control valve 400, is in a closed position. As shown in FIG. 4, the plug 430 and/or, more generally, the control valve 400, is in an open position. Although the example of FIGS. 4 and 5 illustrates a specific shape of the plug 430 and the integral seat 410 of the modular valve trim assembly 402, plugs and integral seats of the modular valve trim assemblies described herein may be of any shape, arrangement and/or orientation so long as the plug is configured to mate with the integral seat when the plug and/or, more generally, the control valve 400, is in a closed position.

The modular valve trim assembly 402 of FIGS. 4 and 5 also includes an example stem 432 integrally formed with the plug 430 as an example single-piece plug-stem member 434. The stem 432 of the single-piece plug-stem member 434 passes through an example cavity 436 of the single-piece bonnet 406. An example portion 438 of the stem 432 of the single-piece plug-stem member 434 protrudes externally from the cavity 436 of the single-piece bonnet 406. An example packing 440 (e.g., packing rings, etc.) loaded and/or inserted into the cavity 436 of the single-piece bonnet 406 supports the stem 432 within the cavity 436 of the single-piece bonnet 406 and prevents process fluid from leaking through the cavity 436 of the single-piece bonnet 406 between the stem 432 and the single-piece bonnet 406.

The single-piece plug-stem member 434 is movable and/or slidable within the integral cage 408 of the single-piece bonnet 406 relative to the integral seat 410 of the single-piece bonnet 406 along an example longitudinal axis 442 defined by the stem 432 of the single-piece plug-stem member 434. As the plug 430 of the single-piece plug-stem member 434 moves and/or slides downward from its current position shown in FIG. 4 past the windows 428 of the integral cage 408, fluid passing through the control valve 400 is restricted and/or blocked. The plug 430 of the single-piece plug-stem member 434 is configured to mate with the integral seat 410 of the single-piece bonnet 406 to fully close off the fluid pathway 418 shown in FIG. 4.

The modular valve trim assembly 402 of FIGS. 4 and 5 also includes an example packing flange 444. The packing flange 444 is removably coupled to the single-piece bonnet 406 via a plurality of example nuts 446 and example bolts and/or threaded studs 448 to confine the packing 440 within the cavity 436 of the single-piece bonnet 406. The stem 432 of the single-piece plug-stem member 434 passes through an example cavity 450 of the packing flange 444.

The modular valve trim assembly 402 of FIGS. 4 and 5 also includes example breakable supports 452 (e.g., one or more low-strength lattice structure(s)) integrally formed with the plug 430 and the single-piece bonnet 406. The breakable supports 452 enable and/or stabilize the formation of the plug 430 during an additive manufacturing process used to fabricate the modular valve trim assembly 402. In the illustrated example of FIGS. 4 and 5, the breakable supports 452 removably couple the plug 430 to the single-piece bonnet 406. The breakable supports 452 are separable from the plug 430 and the single-piece bonnet 406 by, for example, twisting the plug 430 relative to the single-piece bonnet 406 and/or moving the plug 430 relative to (e.g., toward or away from) the integral seat 410 of the single-piece bonnet 406. The breakable supports 452 are removable from the single-piece bonnet 406 upon the breakable supports 452 being separated from the plug 430 and the single-piece bonnet 406. Although the example of FIGS. 4 and 5 illustrates a specific number of breakable supports located at specific locations within the single-piece bonnet 406, the modular valve trim assemblies described herein may include any number (e.g., 0, 1, 2, 3, etc.) of breakable supports located, arranged and/or oriented at any location(s) within the single-piece bonnet 406.

In some examples, the valve body 404, the single-piece bonnet 406, and/or the single-piece plug-stem member 434 of FIGS. 4 and 5 may further include one or more hardened surface layer(s) integrally formed on one or more underlying surface(s) of the valve body 404, the single-piece bonnet 406, and/or the single-piece plug-stem member 434. The hardened surface layer(s) may increase the resistance of the valve body 404, the single-piece bonnet 406, and/or the single-piece plug-stem member 434 to wear resulting from fluid passing though the control valve 400 of FIG. 4. For example, hardened surface layers may be positioned on the integral cage 408 and/or the integral seat 410 of the single-piece bonnet 406, on the plug 430 of the single-piece plug-stem member 434, and/or along one or more guiding surface(s) and/or high velocity area(s) of the valve body 404 of FIGS. 4 and 5. Each hardened surface layer is formed of a material having a respective hardness value that exceeds a corresponding hardness value of the material from which the corresponding underlying surface layer of the valve body 404, the single-piece bonnet 406, and/or the single-piece plug-stem member 434 is formed. For example, each hardened surface layer may be formed of an Alloy 6 material, and each corresponding underlying surface layer may be formed of a Grade 316 Stainless Steel material. The valve body 404, the single-piece bonnet 406, and/or single-piece plug-stem member 434 of FIGS. 4 and 5 may include any number (e.g., 0, 1, 2, 3, etc.) of hardened surface layers located, arranged and/or oriented at any location(s) within the valve body 404, the single-piece bonnet 406, and/or the single-piece plug-stem member 434.

In some examples, one or more component(s) (e.g., the single-piece bonnet 406, the single-piece plug-stem member 434, the packing flange 444, etc.) of the modular valve trim assembly 402 of FIGS. 4 and 5 may be formed and/or fabricated via one or more casting process(es). For example, the single-piece bonnet 406 including the integral cage 408 and the integral seat 410 may be cast along with the single-piece plug-stem member 434 and the breakable supports 452 as a single, unitary piece of material free of joints.

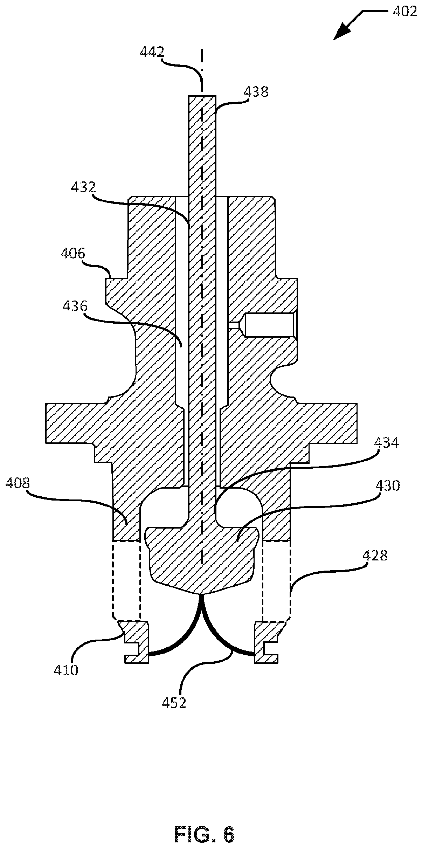

In other examples, one or more component(s) of the modular valve trim assembly 402 of FIGS. 4 and 5 may be formed and/or fabricated via one or more additive manufacturing process(es). For example, FIG. 6 is a cross-sectional view of a portion of the example modular valve trim assembly 402 of FIGS. 4 and 5 as manufactured via a first example additive manufacturing process. In the illustrated example of FIG. 6, the single-piece bonnet 406 including the integral cage 408 and the integral seat 410 has been formed and/or fabricated along with the single-piece plug-stem member 434 and the breakable supports 452 via an additive manufacturing process. Additive manufacturing enables the plug 430 and/or the single-piece plug-stem member 434 of FIGS. 4-6 to be formed such that the plug 430 is irremovably located within the single-piece bonnet 406 of FIGS. 4-6. Positioning the plug 430 in this manner would be prohibitively difficult, if not impossible, via conventional fabrication processes such as milling, molding, etc.

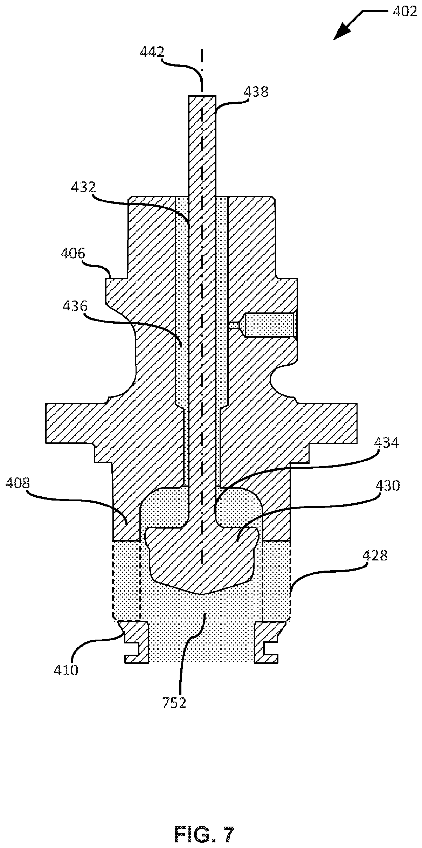

FIG. 7 is a cross-sectional view of a portion of the example modular valve trim assembly 402 of FIGS. 4 and 5 as manufactured via a second example additive manufacturing process. In the illustrated example of FIG. 7, the support function provided by the breakable supports 452 of the modular valve trim assembly 402 of FIGS. 4-6 is instead provided by example non-sintered material 752 positioned within the integral cage 408, the integral seat 410, and the cavity 436 of the single-piece bonnet 406. The non-sintered material 752 supports (e.g., provides a base and/or lateral support for) the formation of the plug 430, the stem 432, and/or the single-piece plug-stem member 434 in the single-piece bonnet 406. The non-sintered material 752 is removable from the integral cage 408, the integral seat 410, and the cavity 436 of the single-piece bonnet 406 following completion of the additive manufacturing process (e.g., a selective laser sintering (SLS) process) utilized to fabricate the single-piece bonnet 406 and the single-piece plug-stem member 434.

Recent advancements in additive manufacturing enable the deposition of multiple, different materials during a single build and/or print of the manufacturing process. For example, additive manufacturing enables a cobalt/chrome alloy (e.g., Alloy 6) to be deposited and/or formed over stainless steel (e.g., Grade 316 Stainless Steel). In some examples, the additive manufacturing process(es) used to fabricate the modular valve trim assembly 402 of FIGS. 4 and 5 may result in the single-piece bonnet 406, the integral cage 408, the integral seat 410, the plug 430, the stem 432, and the single-piece plug-stem member 434 being formed of the same material. In such examples, the above-described hardened surface layers positioned on the integral cage 408 and/or the integral seat 410 of the single-piece bonnet 406, and/or on the plug 430 of the single-piece plug-stem member 434 may be formed of one or more material(s) that differ from (e.g., provide greater hardness relative to) the material used to form the corresponding underlying surface layer(s) of the single-piece bonnet 406 and/or the single-piece plug-stem member 434. In other examples, respective ones of the single-piece bonnet 406, the integral cage 408, the integral seat 410, the plug 430, the stem 432, and/or the single-piece plug-stem member 434 may be formed via one or more different material(s).

In some examples, the use of multi-material additive manufacturing enables the non-sintered material 752 described above to be removably positioned in the integral cage 408, the integral seat 410, and/or the cavity 436 of the single-piece bonnet 406 to support the plug 430, the stem 432, and/or the single-piece plug-stem member 434 during the fabrication of modular valve trim assembly 402, as shown in FIG. 7. In such examples, the non-sintered material 752, although not bonded to any other portion of the modular valve trim assembly 402, nonetheless provides support for the formation of the plug 430, the stem 432, and/or the single-piece plug-stem member 434, and may thereafter be removed from the single-piece bonnet 406 upon completion of the additive manufacturing process.

From the foregoing, it will be appreciated that the disclosed modular valve trim assemblies for control valves provide numerous advantages over conventional control valves having individual trim components. Implementation of a control valve having a modular valve trim assembly reduces the number of individual trim components to be inserted into the body of the valve during the valve assembly process. For example, implementation of a known control valve having a modular valve trim assembly comprising a bonnet, a cage coupled to the bonnet, and a seat integrally formed with the cage advantageously eliminates the need for an individual seat ring, an individual seat ring gasket, an individual spiral wound gasket and/or an individual shim gasket in the control valve. According to the invention , the implementation of a control valve having a modular valve trim assembly comprising a single-piece bonnet having an integral cage and an integral seat advantageously eliminates the need for an individual seat ring, an individual seat ring gasket, an individual cage, an individual spiral wound gasket and/or an individual shim gasket in the control valve.

Reducing the number of individual trim components to be inserted and assembled into the body of a valve advantageously reduces the variability associated with the manufacturing and assembly processes of the valve, reduces the extent of time associated with the manufacturing and assembly processes of the valve, and provides for a more robust valve. Reducing the number of individual trim components to be inserted and assembled into the body of the valve also advantageously reduces the number of joints present in the valve, and accordingly reduces the number of potential leakage paths of the valve. Reducing the number of individual trim components to be inserted and assembled into the body of the valve also advantageously reduces the number of serviceable components of the valve, thereby reducing the possibility that at least one serviceable component of the valve will require servicing during the lifetime of the valve.

Each disclosed modular valve trim assembly may be loaded and/or inserted as a single, unitary structure into a body of a control valve. The unitary nature of the disclosed modular valve trim assemblies advantageously enables valve trim replacement operations and/or processes to be completed in less time relative to the time that may be consumed when replacing one or more individual valve trim components of the conventional control valves described above. The unitary nature of the disclosed modular valve trim assemblies also advantageously enables a modular valve trim assembly (e.g., a replacement modular valve trim assembly) to be leak tested prior to shipment of the modular valve trim assembly and/or prior to attachment of the modular valve trim assembly to a control valve.

## Claims

1. A modular valve trim assembly comprising:
a single-piece bonnet (406) including an integral cage (408) and an integral seat (410); and
a plug (430) irremovably located within the single-piece bonnet (406); and
a stem (432) integrally formed with the plug (430) as a single-piece plug member (434), wherein a portion of the stem (432) protrudes externally from a cavity (436) of the single-piece bonnet (406),
wherein the plug (430) is wholly located within the integral cage (408) of the single-piece bonnet (406) and the plug (430) is movable relative to the integral seat (410) and,
wherein the plug (430) is configured to mate with the integral seat (410) of the single-piece bonnet (406) when the plug (430) is in a closed position.

2. The modular valve trim ; assembly of claim 1, further comprising a bonnet gasket (424) coupled to the single-piece bonnet (406).

3. The modular valve trim assembly of claim 1 or 2, further comprising a radial seal (426) coupled to the integral cage (408) proximate the integral seat (410).

4. The modular valve trim; assembly of claim 1, 2 or 3, further comprising a breakable support (452) integrally formed with the plug (430) and the single-piece bonnet (406), the breakable support (452) being separable from the plug (430) and the single-piece bonnet (406) to removably couple the plug (430) to the single-piece bonnet (406), the breakable support (452) being removable from the single-piece bonnet (406) upon the breakable support (452) being separated from the plug (430) and the single-piece bonnet (406).

5. The modular valve trim assembly of claim 1, 2, 3, or 4, further comprising non-sintered material (752) to support the plug (430) within the single-piece bonnet (406), the non-sintered material (752) being removable from the single-piece bonnet (406).

6. A control valve, comprising:
a valve body (404); and
the modular valve trim assembly (402) of claim 1, wherein the single-piece bonnet (406) is removably couplable to the valve body (404), the integral cage (408) and the integral seat (410) of the single-piece bonnet (406) being positioned within a cavity (414) of the valve body (404) when the single-piece bonnet (406) is coupled to the valve body (404).

7. The control valve of claim 6, wherein the plug (430) of the single-piece plug-stem member (434) is configured to mate with the integral seat (410) to close a fluid pathway (418) located within the valve body (404) when the single-piece bonnet (406) is coupled to the valve body (404).

8. A method for manufacturing a modular valve trim assembly (402), the method comprising:
integrally forming ; via one or more additive manufacturing process(es) a single-piece bonnet (406) including an integral cage (408) and an integral seat i (410), and a plug (430) irremovably located in (110), the integral cage (408) wherein a stem (432) is integrally formed with the plug (430) as a single-piece plug member (434);
wherein a portion of the stem (432) protrudes externally from a cavity (436) of the single-piece bonnet (406), and
wherein the plug (430) is wholly located within the integral cage (408) and the plug (430) is movable relative to the integral seat (410) and, wherein the plug (430) is configured to mate with the integral seat (410) of the single-piece bonnet (406) when the plug (430) is in a closed position.

9. The method of claim 8, further comprising:
positioning a packing (440) in the cavity (436) of the single-piece bonnet (406); and
coupling a packing flange (444) to the single-piece bonnet (406) to confine the packing (440).

10. The method of claim 8 or 9, further comprising coupling a bonnet gasket (424) to the single-piece bonnet (406).

11. The method of claim 8, 9 or 10, further comprising coupling a radial seal (426) to the integral cage (408) proximate the integral seat (410).

## Patentansprüche

1. Modulare Ventilgarnituranordnung umfassend:
eine einteilige Haube (406), die einen einstückigen Käfig (408) und einen einstückigen Sitz (410) aufweist; und
einen Stopfen (430), der innerhalb der einteiligen Haube (406) unabnehmbar angeordnet ist; und
einen Schaft (432), der einstückig mit dem Stopfen (430) als einteiliger Stopfenteil (434) ausgebildet ist, worin ein Abschnitt des Schaftes (432) aus einem Hohlraum (436) der einteiligen Haube (406) nach außen vorspringt,
worin der Stopfen (430) innerhalb des einstückigen Käfigs (408) der einteiligen Haube (406) vollständig gelegen ist und der Stopfen (430) relativ zum einstückigen Sitz (410) beweglich ist, und
worin der Stopfen (430) dazu eingerichtet ist, zum einstückigen Sitz (410) der einteiligen Haube (406) zu passen, wenn der Stopfen (430) sich in einer geschlossenen Stellung befindet.

2. Modulare Ventilgarnituranordnung nach Anspruch 1, ferner umfassend einen Haubendichtungsring (424), der mit der einteiligen Haube (406) gekoppelt ist.

3. Modulare Ventilgarnituranordnung nach Anspruch 1 oder 2, ferner umfassend eine radiale Dichtung (426), die mit dem einstückigen Käfig (408) in der Nähe des einstückigen Sitzes (410) gekoppelt ist.

4. Modulare Ventilgarnituranordnung nach Anspruch 1, 2 oder 3, ferner umfassend eine zerreissbare Abstützung (452), die einstückig mit dem Stopfen (430) und mit der einteiligen Haube (406) ausgebildet ist, wobei die zerreissbare Abstützung (452) von dem Stopfen (430) und von der einteiligen Haube (406) trennbar ist, um den Stopfen (430) mit der einteiligen Haube (406) abnehmbar zu koppeln, wobei die zerreissbare Abstützung (452) von der einteiligen Haube (406) dann abnehmbar ist, indem die zerreissbare Abstützung (452) von dem Stopfen (430) und von der einteiligen Haube (406) getrennt wird.

5. Modulare Ventilgarnituranordnung nach Anspruch 1, 2, 3 oder 4, ferner umfassend nicht-gesintertes Material (752), um den Stopfen (430) innerhalb der einteiligen Haube (406) abzustützen, wobei das nicht-gesinterte Material (752) von der einteiligen Haube (406) abnehmbar ist.

6. Steuerventil, umfassend:
einen Ventilkörper (404); und
die modulare Ventilgarnituranordnung (402) nach Anspruch 1, worin die einteilige Haube (406) mit dem Ventilkörper (404) abnehmbar koppelbar ist, wobei der einstückige Käfig (408) und der einstückige Sitz (410) der einteiligen Haube (406) innerhalb eines Hohlraums (414) des Ventilkörpers (404) positioniert sind, wenn die einteilige Haube (406) mit dem Ventilkörper (404) gekoppelt ist.

7. Steuerventil nach Anspruch 6, worin der Stopfen (430) des einteiligen Stopfen-Schaftteils (434) dazu eingerichtet ist, zum einstückigen Sitz (410) zu passen, um einen Fluiddurchgang (418) zu verschließen, der innerhalb des Ventilkörpers (404) gelegen ist, wenn die einteilige Haube (406) mit dem Ventilkörper (404) gekoppelt ist.

8. Verfahren zur Fertigung einer modularen Ventilgarnituranordnung (402), wobei das Verfahren umfasst:
einstückiges Ausbilden, über ein oder mehrere additive Fertigungsverfahren, einer einteiligen Haube (406), die einen einstückigen Käfig (408) und einen einstückigen Sitz (410) aufweist, und eines Stopfens (430), der innerhalb des einstückigen Käfigs (408) unabnehmbar angeordnet ist, worin ein Schaft (432) einstückig mit dem Stopfen (430) als einteiliger Stopfenteil (434) ausgebildet ist;
worin ein Abschnitt des Schaftes (432) aus einem Hohlraum (436) der einteiligen Haube (406) nach außen vorspringt, und
worin der Stopfen (430) innerhalb des einstückigen Käfigs (408) vollständig gelegen ist und der Stopfen (430) relativ zum einstückigen Sitz (410) beweglich ist, und
worin der Stopfen (430) dazu eingerichtet ist, zum einstückigen Sitz (410) der einteiligen Haube (406) zu passen, wenn der Stopfen (430) sich in einer geschlossenen Stellung befindet.

9. Verfahren nach Anspruch 8, ferner umfassend:
Positionieren einer Packung (440) in dem Hohlraum (436) der einteiligen Haube (406); und
Koppeln eines Packungsflansches (444) mit der einteiligen Haube (406), um die Packung (440) zu begrenzen.

10. Verfahren nach Anspruch 8 oder 9, ferner umfassend das Koppeln eines Haubendichtungsringes (424) mit der einteiligen Haube (406).

11. Verfahren nach Anspruch 8, 9 oder 10, ferner umfassend das Koppeln einer radialen Dichtung (426) mit dem einstückigen Käfig (408) in der Nähe des einstückigen Sitzes (410).

## Revendications

1. Ensemble de garniture de soupape modulaire, comprenant :
un capot monobloc (406) comprenant une cage intégrée (408) et un siège intégré (410); et
une fiche (430) située de manière inamovible à l'intérieur du capot monobloc (406) ; et
une tige (432) formée d'un seul tenant avec la fiche (430) comme élément de fiche monobloc (434), dans laquelle une partie de la tige (432) fait saillie à l'extérieur d'une cavité (436) du capot monobloc (406),
dans lequel la fiche (430) est entièrement située dans la cage intégrée (408) du capot monobloc (406) et la fiche (430) est mobile par rapport au siège intégré (410) et,
dans lequel la fiche (430) est configurée pour s'accoupler avec le siège intégré (410) du capot monobloc (406) lorsque la fiche (430) est en position fermée.

2. Ensemble de garniture de soupape modulaire selon la revendication 1, comprenant en outre un joint de capot (424) couplé au capot monobloc (406).

3. Ensemble de garniture de soupape modulaire selon la revendication 1 ou 2, comprenant en outre un joint radial (426) couplé à la cage intégrée (408) à proximité du siège intégré (410).

4. Ensemble de garniture de soupape modulaire selon la revendication 1, 2 ou 3, comprenant en outre un support cassable (452) formé d'un seul tenant avec la fiche (430) et le capot monobloc (406), le support cassable (452) étant séparable de la fiche (430) et du capot monobloc (406) pour coupler de manière amovible la fiche (430) au capot monobloc (406), le support cassable (452) pouvant être retiré du capot monobloc (406) lorsque le support cassable (452) est séparé de la fiche (430) et du capot monobloc (406).

5. Ensemble de garniture de soupape modulaire selon la revendication 1, 2, 3 ou 4, comprenant en outre un matériau non fritté (752) pour supporter la fiche (430) à l'intérieur du capot monobloc (406), le matériau non fritté (752) pouvant être retiré du capot monobloc (406).

6. Soupape de commande, comprenant :
un corps de soupape (404) ; et
l'ensemble de garniture de soupape modulaire (402) selon la revendication 1, dans lequel le capot monobloc (406) est couplé de manière amovible au corps de soupape (404), la cage intégrée (408) et le siège intégré (410) du capot monobloc (406) étant positionnés dans une cavité (414) du corps de soupape (404) lorsque le capot monobloc (406) est couplé au corps de soupape (404).

7. Soupape de commande selon la revendication 6, dans laquelle la fiche (430) de l'élément de fiche monobloc (434) est configuré pour s'accoupler avec le siège intégré (410) afin de fermer un passage de fluide (418) situé à l'intérieur du corps de soupape (404) lorsque le capot monobloc (406) est couplé au corps de soupape (404).

8. Procédé de fabrication d'un ensemble de garniture de soupape modulaire (402), le procédé comprenant :
la formation intégrale, par un ou plusieurs procédés de fabrication d'additifs, d'un capot monobloc (406) comprenant une cage intégrée (408) et un siège intégré (410), et une fiche (430) situé de manière inamovible dans la cage intégrée (408), dans lequel une tige (432) est formée en une seule pièce avec la fiche (430) en tant qu'élément de fiche monobloc (434) ;
dans lequel une partie de la tige (432) fait saillie à l'extérieur d'une cavité (436) du capot monobloc (406), et
dans lequel la fiche (430) est entièrement située dans la cage intégrée (408) et la fiche (430) est mobile par rapport au siège intégré (410) et,
dans laquelle la fiche (430) est configurée pour s'accoupler avec le siège intégré (410) du capot monobloc (406) lorsque la fiche (430) est en position fermée.

9. Méthode selon la revendication 8, comprenant en outre :
le positionnement d'une garniture (440) dans la cavité (436) du capot monobloc (406); et
le couplage d'une bride de garniture (444) au capot monobloc (406) pour confiner la garniture (440).

10. Méthode selon la revendication 8 ou 9, comprenant en outre le couplage d'un joint de capot (424) au capot monobloc (406).

11. Méthode selon la revendication 8, 9 ou 10, comprenant en outre le couplage d'un joint radial (426) à la cage intégrée (408) à proximité du siège intégré (410).
